# EUROPEAN PATENT APPLICATION

(11) **EP 4 548 774 A1**
(43) Date of publication of application: **07.05.2025**
(21) Application number: 22949373.9
(22) Date of filing: 29.06.2022
(51) Int. Cl.: A23L 7/10, A47J 27/16

(54) **RICE COOKING SYSTEM**

(71) Applicant: Kabushiki Kaisha Aiho, Aichi 4428580 (JP)
(72) Inventor: IMAIZUMI, Tadaharu, Toyokawa-shi, Aichi 442-8580 (JP)
(74) Representative: Weickmann & Weickmann PartmbB
(86) International application number: PCT/JP2022/026043
(87) International publication number: WO 2024/004098

(57) **Abstract**

A rice cooking system includes a conveyor, a steam outlet, and a loosener. The conveyor includes a conveying body that has a structure to let steam pass through upwardly, and is configured to convey rice placed on the conveying body by a movement of the conveying body. The steam outlet is disposed below the conveying body and configured to supply steam to the rice placed on the conveying body from below the conveying body. The loosener is configured to loosen the rice placed on the conveying body in a given loosening area in the conveying path of the rice on the conveyor. The steam outlet is situated at a location deviated upstream or downstream from the loosening area in the conveying path.

## Description

### TECHNICAL FIELD

The present disclosure relates to a rice cooking system.

### BACKGROUND ART

A rice cooking system that cooks rice conveyed through a belt conveyor by heating the rice with steam and sprinkling water on the rice is known (for example, see Patent Document 1). In this rice cooking system, the steam is supplied on the entire conveying path of the rice on the belt conveyor.

### PRIOR ART DOCUMENTS

### PATENT DOCUMENTS

Patent Document 1: Japanese Unexamined Patent Application Publication No. 2006-149223

### SUMMARY OF THE INVENTION

### PROBLEMS TO BE SOLVED BY THE INVENTION

In order to uniformly cook rice, it is preferable to loosen the rice during cooking. However, a rice stack thickness of the rice stacked on a belt changes due to a loosening motion to loosen the rice when loosening the rice conveyed on the belt.

In a case where the steam is supplied so as to pass through the belt from below to above the belt, the ease of the steam passage through the belt is affected by the rice stack thickness. Accordingly, in an environment where the rice stack thickness on the belt is changed due to the loosening motion, the steam is likely to pass through the belt from below to above at a location where the rice stack thickness is smaller. Such uneven passage of the steam gives an unfavorable effect on the finish of the cooked rice.

Thus, in one aspect of the present disclosure, it is preferable to provide a new technique to reduce the unevenness in steam application on the rice and achieve an excellent finish of the cooked rice in the rice cooking system.

### MEANS FOR SOLVING THE PROBLEMS

One aspect of the present disclosure provides a rice cooking system. The rice cooking system includes a conveyor, a steam outlet, and a loosener. The conveyor includes a conveying body having a structure to let steam pass through upwardly, and is configured to convey rice placed on the conveying body by a movement of the conveying body.

The steam outlet is disposed below the conveying body and is configured to supply steam to the rice placed on the conveying body from below the conveying body. The loosener is configured to loosen the rice placed on the conveying body in a given loosening area in a conveying path of the rice on the conveyor. The steam outlet is situated at a position deviated upstream or downstream from the loosening area in the conveying path.

Due to the loosening motion, a rice stack thickness of the rice on the conveying body may temporarily change and become ununiform. In a case where the steam passes through an area where the rice stack thickness is ununiform from below to above the area, the steam is likely to pass through a location where the rice stack thickness is smaller from below to above the location. This may give an unfavorable effect on the finish of the cooked rice.

In a case where the steam outlet is situated right beneath the loosening area and disposed in a linearly aligned manner with respect to the loosening area, the center of the loosening area is situated at the center of the path of the steam from the steam outlet. In this case, the ununiformity of the rice stack thickness is likely to give an unfavorable effect on rice cooking.

Meanwhile, in a case where the steam outlet is disposed at a location deviated upstream or downstream from the loosening area in the conveying path, the amount of steam that pass through the loosening area can be reduced. Thus, it is possible to reduce unfavorable effect of the ununiformity of the rice stack thickness on the finish of the cooked rice.

Thus, according to one aspect of the present disclosure, in the rice cooking system where the steam is supplied to the rice from below, it is possible to inhibit the application of the steam to the rice from being uneven and achieve favorable finish of the cooked rice.

According to one aspect of the present disclosure, the loosening area may include a first point where a rice stack thickness of the rice becomes small due to a motion of the loosener to loosen the rice. In this case, the steam outlet may be disposed at a position, as the location deviated from the loosening area, that does not overlap with a spot right beneath the first point. According to one aspect of the present disclosure, the steam outlet may be disposed at a location that does not overlap with a vertical line passing through the first point.

According to one aspect of the present disclosure, the loosener may operate to loosen the rice by temporarily scooping up the rice placed on the conveying body from the conveying body. In this case, the loosening area may include a second point where the rice stack thickness of the rice becomes smaller than that of a surrounding area due to scooping up of the rice.

The steam outlet may be disposed at a position, as the location deviated from the loosening area, that does not overlap with a spot right beneath the second point. According to one aspect of the present disclosure, the steam outlet may be disposed at a location that does not overlap with a vertical line passing through the second point. Such an arrangement can inhibit the application of the steam to the rice from being uneven.

According to one aspect of the present disclosure, the loosener may be a rotational wing device including a rotational shaft and wings disposed around the rotational shaft. The rotational shaft may be disposed above the conveying body along a surface of the conveying body. The wings may include two or more wings configured to scoop up the rice placed on the conveying body.

According to one aspect of the present disclosure, the steam outlet may be disposed at a position, as the location deviated from the loosening area, that does not overlap with a spot right beneath the rotational shaft included in the loosener. According to one aspect of the present disclosure, the steam outlet may be disposed at a location that does not overlap with a vertical line passing through the rotational shaft.

When the rice is scooped up by the rotational wing device, the rice stack thickness of the rice becomes the smallest at a spot right beneath the rotational shaft. It is meaningful to dispose the steam outlet such that the steam outlet does not overlap with the spot right beneath the rotational shaft in that unevenness of the application of the steam to the rice is reduced.

According to one aspect of the present disclosure, the loosening area may correspond to an area where the rice is scooped up by the loosener. According to one aspect of the present disclosure, the steam outlet may be disposed at a location that does not overlap with the entirety of the loosening area. According to one aspect of the present disclosure, the steam outlet may be disposed at a location that does not overlap with the entirety of the area where the rice is scooped up by the loosener.

According to one aspect of the present disclosure, the rice cooking system may include a waterer. The waterer may be configured to supply water to the rice placed on the conveying body from above. The waterer may be disposed upstream of the loosener in the conveying path.

Since the waterer is disposed upstream of the loosener in the conveying path, it is possible to resolve unevenness of water supply to the rice by a loosening motion after the water is supplied to the rice and improve the finish of the cooked rice.

According to one aspect of the present disclosure, the steam outlet may be disposed upstream of the waterer in the conveying path. Water films may be formed on the conveying body due to the water supply. This may lower the ability of the conveying body to allow the steam to pass through at a portion where the water films are formed, and may cause ununiformity in transfer of the steam through the rice. Such ununiformity in transfer of the steam due to the water films can be reduced by disposing the steam outlet upstream of the waterer.

According to one aspect of the present disclosure, the rice cooking system may include a drainage. The drainage may be disposed below the conveying body at a location corresponding to the waterer. The drainage may be disposed to receive water running down from the waterer through the conveying body. As a result of including the drainage, it is possible to appropriately drain excess water from the waterer that is not absorbed by the rice.

According to one aspect of the present disclosure, the rice cooking system may include a cover that covers the conveyor from above. As a result of the cover inhibiting the steam from diffusing upwardly, a space below the cover may function as a high-temperature cooking space, and a space above the cover may function as a noncooking space having a temperature lower than the temperature of the cooking space. The waterer may be disposed in the noncooking space situated above the cover. The waterer may supply water to the rice placed on the conveying body located in the cooking space through a hole formed on the cover.

There are cases where the temperature of water suitable for the water supply is lower than the temperature suitable for cooking the rice. As a result of setting a space above the conveyor as the noncooking space that has a temperature lower than the temperature of the cooking space by using the cover, and disposing the waterer in the noncooking space, it is possible to reduce the effect of the high temperature in the cooking space and supply water having an appropriate temperature from the waterer, which makes it possible to achieve more favorable finish of the cooked rice.

### BRIEF DESCRIPTION OF THE DRAWINGS

FIG. 1 is a block diagram showing a schematic configuration of a rice cooking system.
FIG. 2 is a cross sectional view of a conveyance mechanism and a loosening mechanism for rice included in the rice cooking system.
FIG. 3 is an enlarged cross sectional view of the conveyance mechanism and the loosening mechanism explaining a first arrangement of steam outlets.
FIG. 4 is an enlarged cross sectional view of the conveyance mechanism and the loosening mechanism explaining a second arrangement of the steam outlets.

### EXPLANATION OF REFERENCE NUMERALS

1...rice cooking system; 10...conveyance mechanism; 20...conveyor; 20A...first conveyor; 20B...second conveyor; 21, 23, 24, 25...pulley; 29...conveyor belt; 29A, 29B...belt; 31...rice supply outlet; 33...connecting structure; 35...exit; 37...shutter; 39...cover; 39H...hole; 40...loosening mechanism; 41, 42, 43, 44, 45...loosener; 51...rotational shaft; 55...wing; 60...watering mechanism; 62, 63, 64, 65...waterer; 69...injection spout; 72, 73, 74, 75...drainage; 72a, 73a, 74a, 75a...strainer; 72b, 73b, 74b, 75b...drain pipe; 80...steaming mechanism; 81, 82, 83, 84, 85...steam outlet; 81a, 82a, 83a, 84a, 85a...steaming pipe; 81b, 82b, 83b, 84b, 85b...drain pipe; 90...steamer; 91...steaming pipe; 99...exhaust duct; 100...control system; 110...operation panel.

### MODE FOR CARRYING OUT THE INVENTION

Exemplary embodiments of the present disclosure will be explained hereinafter with reference to the drawings.

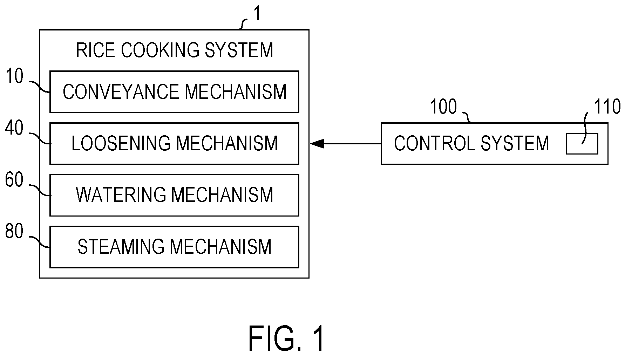

A rice cooking system 1 of the present embodiment shown in FIG. 1 is a rice cooking system using steam configured to apply water vapor to rice to cook the rice while conveying the rice. In this rice cooking system 1, for example, saturated water vapor or superheated water vapor is used as a heat source to cook the rice.

Hereinafter, water vapor is simply referred to as "steam". The rice cooking system 1 is controlled by a control system 100. The control system 100 causes the rice cooking system 1 to operate in accordance with a command of an operator inputted through an operation panel 110.

The rice cooking system 1 includes a conveyance mechanism 10, a loosening mechanism 40, a watering mechanism 60, and a steaming mechanism 80. The conveyance mechanism 10 is configured to convey rice supplied. The loosening mechanism 40 is configured to loosen the rice conveyed by the conveyance mechanism 10. The watering mechanism 60 is configured to sprinkle water on the rice conveyed. The steaming mechanism 80 is configured to supply steam to the rice conveyed from below.

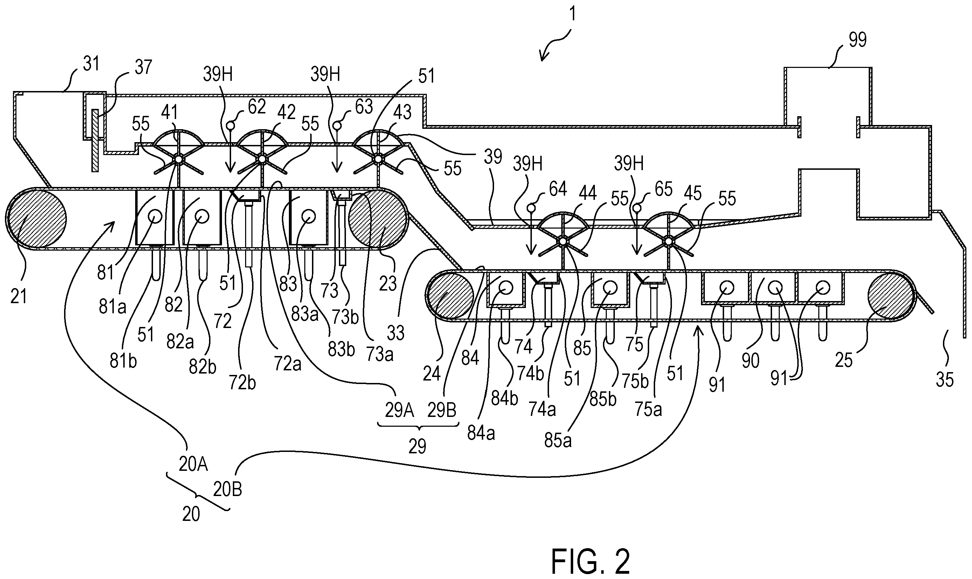

As shown in FIG. 2, the conveyance mechanism 10 includes a conveyor 20, a rice supply outlet 31, a connecting structure 33, an exit 35, a shutter 37, and a cover 39.

The conveyor 20 is configured to convey the rice placed on a conveyor belt 29, which is configured as a conveying body, by a rotation of the conveyor belt 29. Specifically, the conveyor 20 includes a first conveyor 20A and a second conveyor 20B. The first conveyor 20A and the second conveyor 20B are configured as a belt conveyor.

The first conveyor 20A includes pulleys 21, 23 and a belt 29A wound around the pulleys 21, 23. In response to a rotation of the pulleys 21, 23, the belt 29A rotates in the direction of the rotation of the pulleys 21, 23.

The belt 29A is an endless belt. The belt 29A includes a mesh structure that allows steam to pass through from below to above the mesh structure. The mesh size is set to be smaller than a grain of rice.

The first conveyor 20A receives the rice supplied from the rice supply outlet 31 on a surface of the belt 29A facing upward and conveys the rice to the downstream on the conveying path by the rotation of the belt 29A. The rice supplied is immersed rice prepared by immersing the rice in water or a liquid seasoning.

The first conveyor 20A conveys the rice to the entrance of the connecting structure 33 located downstream in the conveying path. The rice conveyed by the first conveyor 20A is cooked to a state where the rice has its core slightly undercooked until the rice reaches the entrance of the connecting structure 33.

The connecting structure 33 includes an inclined surface inclined downwards from the first conveyor 20A to the second conveyor 20B. The rice supplied from the first conveyor 20A to the entrance of the connecting structure 33 moves on the inclined surface to the exit of the connecting structure 33 by sliding due to gravity.

The second conveyor 20B is disposed at the exit of the connecting structure 33 and situated lower than the first conveyor 20A. The rice conveyed from the first conveyor 20A is supplied to the second conveyor 20B through the connecting structure 33.

Likewise with the first conveyor 20A, the second conveyor 20B includes pulleys 24, 25 and an endless belt (hereinafter simply referred to as "belt") 29B wound around the pulleys 24, 25.

In response to the rotation of the pulleys 24, 25, the belt 29B rotates in a direction of the rotation of the pulleys 24, 25. The belt 29B includes a mesh structure that is configured to allow steam to pass through from below to above the mesh structure. The mesh size is set to be smaller than a grain of rice.

The size of the rice on the belt 29B is greater than the size of the rice on the belt 29A due to water absorption. Thus, the mesh size at the belt 29B is set to be greater than the mesh size at the belt 29A considering its ability to allow the water or steam to pass thorough.

The second conveyor 20B receives the rice supplied from the exit of the connecting structure 33 on a surface of the belt 29B facing upward and conveys the rice to the downstream in the conveying path by the rotation of the belt 29B. The exit 35 is disposed at the downstream end of the conveying path on the second conveyor 20B.

The rice conveyed by the second conveyor 20B is cooked to the finish until the rice reaches the exit 35. The finished rice is discharged from the exit 35 and received in an unillustrated tray disposed below the exit 35. As mentioned above, the rice supplied from the rice supply outlet 31 is conveyed to the exit 35 by the rotation of the conveyor belt 29, specifically of the belts 29A and 29B, included in the conveyor 20 while being steamed.

The shutter 37 is disposed downstream of the rice supply outlet 31 in the conveying path of the rice. The shutter 37 includes a structure to even out the rice. The shutter 37 evens out the rice such that the rice conveyed downstream in the conveying path keeps a roughly constant rice stack thickness on the conveyor belt 29. The rice moves with the rotation of the conveyor belt 29 while being stacked on the conveyor belt 29 to have a roughly constant thickness from the upper surface of the conveyor belt 29.

Additionally, the size of a grain of the rice increases due to an expansion of the rice caused by water absorption. Thus, in the present embodiment, the rotational speed of the belt 29B by the second conveyor 20B is designed to be higher than the rotational speed of the belt 29A by the first conveyor 20A.

The rotational speed is set as mentioned above in order to inhibit the rice stack thickness of the rice on the conveyor belt 29 from changing due to the changes in the size of a grain of the rice. In the present embodiment, this speed setting helps keep the rice stack thickness of the rice on the conveyor belt 29 roughly the same between the first conveyor 20A and the second conveyor 20B regardless of the changes in the size of a grain of the rice.

The cover 39 is disposed above the conveyor 20 in the conveying path of the rice between the rice supply outlet 31 and the exit 35 in order to inhibit the steam supplied from below the conveyor 20 from diffusing upwardly. Specifically, the cover 39 is disposed to cover an upper space of the conveyor 20 and the conveying path of the rice.

As a result of such inhibition of the steam from diffusing by using the cover 39, the space below the cover 39 functions as a high-temperature cooking space heated by the steam, and the space above the cover 39 functions as a noncooking space having a temperature lower than the temperature of the cooking space. The cover 39 includes holes 39H for supplying water to the cooking space.

As shown in FIG. 2, the loosening mechanism 40 includes looseners 41, 42, 43, 44, 45 discretely disposed in the conveying direction of the rice in the conveying path of the rice. Each of the looseners 41, 42, 43, 44, 45 is configured as a rotational wing device. Each of the looseners 41, 42, 43, 44, 45 includes a rotational shaft 51 and wings 55 disposed around the rotational shaft 51.

The rotational shafts 51 are disposed along the surface of the conveyor belt 29 which is parallel to the horizontal plane. Specifically, the rotational shafts 51 are disposed in parallel to the surface of the conveyor belt 29. Furthermore, the rotational shafts 51 are disposed orthogonally to the rotational direction of the conveyor belt 29. The rotational direction of the conveyor belt 29 corresponds to the conveying direction of the rice.

The wings 55 are disposed around the rotational shaft 51. Specifically, the wings 55 are radially arranged with respect to the rotational shaft 51 and formed in a manner where they can scoop up the rice to loosen the rice. Each of the wings 55 includes an elongated member having a surface that is extended in the axis direction and the radial direction of the rotational shaft 51. The elongated member may be flexible. The elongated member may be elastic.

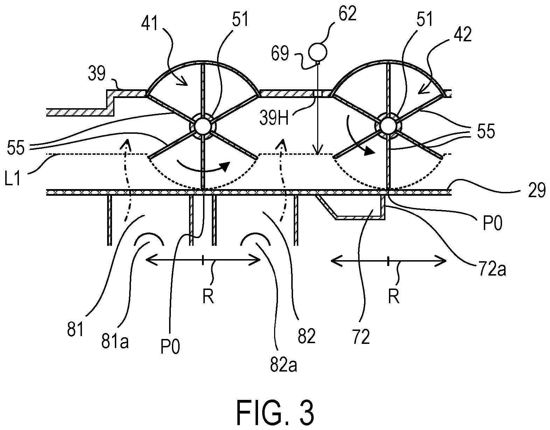

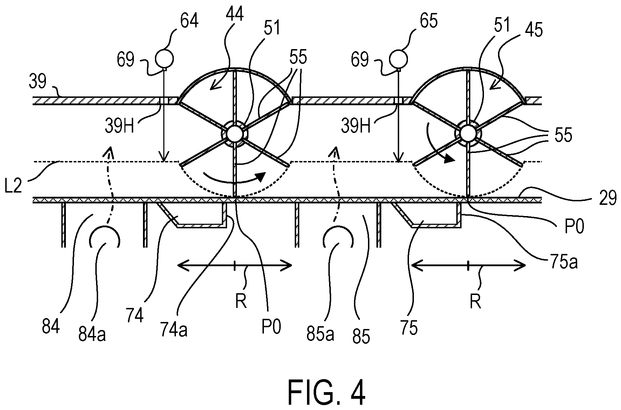

The radial length from the center of the rotational shaft 51 to an end of each of the wings 55 in the radial direction is roughly the same as the distance from the center of the rotational shaft 51 to the surface of the conveyor belt 29. In other words, as shown in FIG. 3 and FIG. 4, the wings 55 are attached to the rotational shaft 51 and located such that, when each of the wings 55 is located right beneath the rotational shaft 51, the end of each of the wings 55 barely touches or slightly touches the surface of the conveyor belt 29.

The rotational shaft 51 rotates such that the wing 55 located right beneath the rotational shaft 51 moves in the conveying direction of the rice. Each of the wings 55 operates such that it temporarily scoops up the rice on the surface of the conveyor belt 29 and places the scooped rice back on the conveyor belt 29 in a given area on the surface of the conveyor belt 29 around a spot right beneath the rotational shaft 51 during a single rotation about the rotational shaft 51.

Broken lines L1 and L2 in FIG. 3 and FIG. 4 schematically show the uppermost surface of the rice stacked on the conveyor belt 29, and in an indirect manner, the broken lines L1 and L2 schematically show the rice stack thickness. The given area on the surface of the conveyor belt 29 around the spot right beneath the rotational shaft 51 corresponds to a loosening area R.

Note that "the spot right beneath the rotational shaft 51" means a spot below the rotational shaft 51 on a vertical line passing through the rotational shaft 51. The loosening area R corresponds to an area where the rice is scooped up. In the loosening area R, the rice stack thickness becomes small compared to areas adjacent to the loosening area R due to the rice being scooped up.

In particular, the center of the loosening area R, in other words, a point P0 on the surface of the conveyor belt 29 corresponding to the spot right beneath the rotational shaft 51 corresponds to a spot where the rice stack thickness is the smallest compared to the surrounding area. This spot with the smallest rice stack thickness corresponds to a spot where the resistance to the steam passing through the conveyor belt 29 from below to above is the lowest and thus corresponds to a spot where the steam is most likely to pass through the conveyor belt 29 from below to above.

The watering mechanism 60 includes waterers 62, 63, 64, 65 that are discretely disposed in the conveying direction of the rice in the conveying path of the rice. Each of the waterers 62, 63, 64, 65 is disposed in the noncooking space above the cover 39.

The watering mechanism 60 is configured to supply water to the rice by sprinkling water on the rice placed on the conveyor belt 29 from each of the waterer 62, 63, 64, 65 through the holes 39H formed on the cover 39.

The water supplied to the rice is hot water having a temperature of about 75 °C while the rice placed on the conveyor belt 29 is steamed and cooked at a temperature of about 98 °C. As a result of having the waterers 62, 63, 64, 65 disposed above the cover 39, heat transfer from the hot cooking space to the waterers 62, 63, 64, 65 is inhibited, and thus hot water at an appropriate temperature is supplied to the rice from the waterers 62, 63, 64, 65.

Each of the waterers 62, 63, 64, 65 includes injection spouts 69 formed on a pipe arranged orthogonally to the rotational direction of the conveyor belt 29 so as to cross the conveyor belt 29. Each of the waterers 62, 63, 64, 65 supplies water to the rice placed on the conveyor belt 29 from the injection spouts 69.

The amount of water supplied from the waterers 62, 63, 64, 65 is more than the amount the rice can absorb. The water that reached the surface of the conveyor belt 29 without being absorbed by the rice passes through the conveyor belt 29 and runs down below the conveyor belt 29.

As shown in FIG. 2, the waterers 62, 63, 64, 65 are disposed in relation to the looseners 42, 43, 44, 45 among the looseners 41, 42, 43, 44, 45, excluding the loosener 41 situated uppermost stream in the conveying path.

In other words, in the conveying path of the rice, the waterers 62, 63, 64, 65 are situated upstream of their corresponding looseners 42, 43, 44, 45 in the conveying path and sprinkle water on the rice before the rice is loosened by the corresponding looseners 42, 43, 44, 45.

Accordingly, unevenness of sprinkling of water by the waterers 62, 63, 64, 65 is solved by the loosening motion that comes right after the sprinkling of water. For example, the loosening motion solves the unevenness in water dispersion in the rice stacked on the conveyor belt 29 in the stacking direction caused by the water running down from above.

The watering mechanism 60 further includes drainages 72, 73, 74, 75 in relation to the waterers 62, 63, 64, 65. The drainages 72, 73, 74, 75 are disposed below the conveyor belt 29 at positions corresponding to the waterers 62, 63, 64, 65 respectively in order to appropriately drain excess water from the waterers 62, 63, 64, 65 that is not absorbed by the rice.

At the downstream ends of the drainages 72, 73, 74, 75, strainers 72a, 73a, 74a, 75a are respectively disposed to collect water that is adhered to the conveyor belt 29 without running down to the drainages 72, 73, 74, 75. This collection of water is performed to inhibit the next step from being affected by the uncollected water.

Each of the drainages 72, 73, 74, 75 receives water, supplied from the corresponding waterers 62, 63, 64, 65 and running down through the conveyor belt 29, and drains the water through drain pipes 72b, 73b, 74b, 75b. Since the water collected in the drainage 73, the second upstream drainage among the drainages 72, 73, 74, 75, is low in starch and relatively clean, the water is recycled to the watering from the waterer 63 to reduce operational cost.

Meanwhile, since the water collected in the drainage 72 is highly likely to contain foreign matters, it is not suitable for recycling by circulation. Since the water collected in the drainages 74, 75 is high in starch, it is not suitable for recycling by circulation.

The steaming mechanism 80 includes steam outlets 81, 82, 83, 84, 85 discretely disposed in the conveying direction of the rice, corresponding steaming pipes 81a, 82a, 83a, 84a, 85a and corresponding drain pipes 81b, 82b, 83b, 84b, 85b in the conveying path of the rice. The steam outlets 81, 82, 83, 84, 85 are disposed below the conveyor belt 29 and configured to supply steam to the rice placed on the conveyor belt 29 from below the conveyor belt 29.

These steam outlets 81, 82, 83, 84, 85 are respectively disposed in relation to the looseners 41, 42, 43, 44, 45. The steam supplied from the steam outlets 81, 82, 83 disposed below the belt 29A is moist steam prepared by reheating steam from an external boiler (illustration omitted), and the steam supplied from the steam outlets 84, 85 is dry steam directly supplied from the external boiler. Each of the steam outlets 81, 82, 83, 84, 85 is disposed at a position deviated from the loosening area R of the corresponding looseners 41, 42, 43, 44, 45.

Specifically, each of the steam outlets 81, 82, 83, 84, 85 is disposed at a position deviated upstream from the loosening area R of the corresponding looseners 41, 42, 43, 44, 45 in the conveying path.

Disposing the steam outlets 81, 82, 83, 84, 85 at the positions deviated from the loosening area R may be understood as meaning that the steam outlets 81, 82, 83, 84, 85 are not aligned vertically with respect to the loosening areas R such that the centers of the steam outlets 81, 82, 83, 84, 85 and the centers of the loosening areas R are vertically aligned.

The steam outlet 81 is disposed at a location that does not overlap with the spot right beneath the rotational shaft 51 of the loosener 41, which corresponds to the point P0 where the rice stack thickness is smaller than the surrounding area due to scooping up motions. As mentioned above, the rice is loosened by the scooping up motions in the loosening area R. In the loosening area R, the rice stack thickness is smaller than the area adjacent to the loosening area R due to this scooping up motions, and the rice stack thickness is the smallest at the spot right beneath the rotational shaft 51.

Due to the steam outlet 81 being disposed as mentioned above, the point having the smallest rice stack thickness, where the steam is most likely to pass through, is not located right above the steam outlet 81. Thus, according to the present embodiment, as shown in FIG. 3 by alternate long and short dash line, it is possible to inhibit the steam that moves upwardly from the steam outlet 81 from escaping from the spot having the smallest rice stack thickness located right beneath the rotational shaft 51.

Thus, according to the present embodiment, it is possible to inhibit the travel of the steam from being non-uniform when the steam supplied from the steam outlet 81 travels from below to above the conveyor belt 29 through the rice placed on the conveyor belt 29.

As shown in FIG. 2, the steam outlet 82 is located downstream of the spot right beneath the rotational shaft 51 of the loosener 41 in the conveying path. The steam outlet 82 is thus disposed at a location deviated downstream from the loosening area R of the loosener 41 in the conveying path.

Furthermore, the steam outlet 82 is disposed at a location deviated upstream from the loosening area R of the loosener 42 in the conveying path. Specifically, the steam outlet 82 is disposed at a location that does not overlap with the spot right beneath the rotational shaft 51 of the loosener 42. More specifically, the steam outlet 82 is disposed at a location that does not overlap with the entirety of the loosening area R of the loosener 42. Thus, according to the present embodiment, it is possible to inhibit the steam supplied from the steam outlet 82 from escaping from the spots having the smallest rice stack thickness located right beneath the rotational shafts 51 of the looseners 41, 42.

Furthermore, the steam outlet 82 is located even upstream of the waterer 62 and drainage 72 that are located upstream of the loosener 42 in the conveying path. Water films may be temporarily formed on the mesh structure of the conveyor belt 29 due to the water supplied from the waterer 62.

These water films may temporarily hinder the transfer of the steam from below to above the conveyor belt 29. This lowers the ability of the conveyor belt 29 to allow the steam to pass thorough, and causes ununiformity in steam application to the rice. If the steam outlet 82 is disposed upstream of the waterer 62 as described in the present embodiment, it is possible to reduce ununiformity in the steam application to the rice due to the water films.

In addition, the steam outlet 83 is disposed at a location deviated upstream from the loosening area R of the loosener 43 in the conveying path, which is a location deviated downstream from the loosening area R of the loosener 42 in the conveying path, so that the steam outlet 83 does not overlap with the entirety of the loosening areas R of the looseners 42, 43.

The steam outlet 83 is disposed upstream of the waterer 63 and the drainage 73 that are located upstream of the loosener 43 in the conveying path. Thus, according to the present embodiment, the steam from the steam outlet 83 can be applied to the rice above the steam outlet 83 roughly uniformly by reducing the effect of the water films and the ununiformity of the rice stack thickness.

The steam outlet 84 is disposed at a location deviated upstream from the loosening area R of the loosener 44 in the conveying path so that the steam outlet 84 does not overlap with the entirety of the loosening area R of the loosener 44. The steam outlet 84 is disposed upstream of the waterer 64 and the drainage 74 that are located upstream of the loosener 44 in the conveying path. The hardness of the rice when the rice cooking is finished is adjusted by the application of the steam from the steam outlet 84 and the water supplied from the waterer 64.

The steam outlet 85 is disposed at a location deviated upstream from the loosening area R of the loosener 45 in the conveying path, which is a location deviated downstream from the loosening area R of the loosener 44 in the conveying path, so that the steam outlet 85 does not overlap with the entirety of the loosening areas R of the looseners 44, 45.

The steam outlet 85 is disposed upstream of the waterer 65 and the drainage 75 that are located upstream of the loosener 45 in the conveying path. Slight adjustment in relation to the quality of the finished rice is made by the application of the steam from the steam outlet 85 and the water supplied from the waterer 65.

The rice cooking system 1 further includes a steamer 90 disposed downstream of the loosener 45 in the conveying path. The rice loosened by the loosener 45 undergoes final steaming by the steam from an external boiler (illustration omitted) supplied from a steaming pipe 91 of the steamer 90, and collected from the exit 35. In the rice cooking system 1, an exhaust duct 99 is disposed above the steamer 90.

The rice cooking system 1 of the present embodiment as described above has the features as mentioned above with respect to the arrangements of the steam outlets 81, 82, 83, 84, 85, the waterers 62, 63, 64, 65, and the looseners 41, 42, 43, 44, 45.

Due to these features, an appropriate flow of steam can be formed from below to above the conveyor belt 29, and the steam can be applied to the rice placed on the conveyor belt 29 relatively uniformly in the conveying path of the rice on the conveyor belt 29 from the rice supply outlet 31 to the exit 35 in the rice cooking system 1. Thus, according to the rice cooking system 1, the rice cooking can be finished favorably.

### [Other Embodiments]

The present disclosure should not be limited to the present embodiment as described above and can be implemented in various forms. For example, the numbers of the steam outlets 81, 82, 83, 84, 85, the waterers 62, 63, 64, 65, and the looseners 41, 42, 43, 44, 45 are not limited to the numbers in the aforementioned example.

The steam outlet 81 may be disposed even upstream in the conveying path such that the steam outlet 81 does not overlap with the entirety of the loosening area R of the loosener 41. In this case, the location of the rice supply outlet 31 can also be moved even upstream in the conveying path.

The steam outlets 82, 83, 84, 85 may be disposed so as to overlap with borders of the loosening areas R of the looseners 42, 43, 44, 45 but so as not to overlap with the centers of the loosening areas. For example, the steam outlets 82, 83, 84, 85 may be disposed so as not to overlap with thin center areas where the rice stack thickness is less than 30% of the rice stack thickness of the areas adjacent to the loosening areas R.

Functions of one element in the aforementioned embodiments may be distributed to two or more elements. Functions of two or more elements may be integrated into one element. A part of the configuration of the aforementioned embodiments may be omitted. At least a part of the configuration of the aforementioned embodiments may be added to or replaced with other configuration of the aforementioned embodiments. Any and all modes included in the technical idea defined by the languages of the claims are embodiments of the present disclosure.

## Claims

1. A rice cooking system comprising:
a conveyor including a conveying body having a structure to let steam pass through upwardly and configured to convey rice placed on the conveying body by a movement of the conveying body;
a steam outlet disposed below the conveying body and configured to supply steam to the rice placed on the conveying body from below the conveying body; and
a loosener configured to loosen the rice placed on the conveying body in a given loosening area in a conveying path of the rice on the conveyor,
the steam outlet being situated at a location deviated upstream or downstream from the loosening area in the conveying path.

2. The rice cooking system according to claim 1,
wherein the loosening area includes a point where a rice stack thickness of the rice becomes small due to a motion of the loosener to loosen the rice, and
wherein the steam outlet is disposed at a position, as the location deviated from the loosening area, that does not overlap with a spot right beneath the point.

3. The rice cooking system according to claim 1,
wherein the loosener operates to loosen the rice by temporarily scooping up the rice placed on the conveying body from the conveying body,
wherein the loosening area includes a point where the rice stack thickness of the rice becomes smaller than that of a surrounding area due to scooping up of the rice, and
wherein the steam outlet is disposed at a position, as the location deviated from the loosening area, that does not overlap with a spot right beneath the point.

4. The rice cooking system according to claim 1,
wherein the loosener is a rotational wing device that includes
a rotational shaft disposed above the conveying body along a surface of the conveying body; and
wings disposed around the rotational shaft and configured to scoop up the rice placed on the conveying body, and
wherein the steam outlet is disposed at a position, as the location deviated from the loosening area, that does not overlap with a spot right beneath the rotational shaft.

5. The rice cooking system according to claim 3 or 4,
wherein the loosening area corresponds to an area where the rice is scooped up by the loosener, and
the steam outlet is disposed at a location that does not overlap with an entirety of the loosening area.

6. The rice cooking system according to any one of the claims 1 to 5 further comprising a waterer configured to supply water to the rice placed on the conveying body from above,
wherein the waterer is disposed upstream of the loosener in the conveying path.

7. The rice cooking system according to claim 6,
wherein the steam outlet is disposed upstream of the waterer in the conveying path.

8. The rice cooking system according to claim 6 or 7 further comprising a drainage disposed below the conveying body at a location corresponding to the waterer to receive water running down from the waterer through the conveying body.

9. The rice cooking system according to any one of claims 6 to 8 further comprising a cover that covers the conveyor from above,
wherein, as a result of the cover inhibiting the steam from diffusing upwardly, a space below the cover functions as a high-temperature cooking space, and a space above the cover functions as a noncooking space having a temperature lower than the temperature of the cooking space, and
wherein the waterer is disposed in the noncooking space situated above the cover and supplies water to the rice placed on the conveying body located in the cooking space through a hole formed on the cover.
